# EUROPEAN PATENT APPLICATION

(11) **EP 4 790 883 A1**
(43) Date of publication of application: **12.08.2026**
(21) Application number: 24883750.2
(22) Date of filing: 08.03.2024
(51) Int. Cl.: H02M 3/07

(54) **POWER SUPPLY MODULE, POWER SUPPLY SYSTEM, AND NUCLEAR FUSION REACTION SYSTEM**

(30) Priority: 01.11.2023 CN 202311440931
(71) Applicant: Shanghai Startorus Fusion Technology Company Limited, Shanghai 201808 (CN)
(72) Inventor: SHEN, Yucheng, Xi'an, Shaanxi 712000 (CN); WANG, Shouzhi, Xi'an, Shaanxi 712000 (CN); ZHOU, Hongran, Xi'an, Shaanxi 712000 (CN); CHEN, Rui, Xi'an, Shaanxi 712000 (CN); TAN, Yi, Xi'an, Shaanxi 712000 (CN)
(74) Representative: Valet Patent Services Limited
(86) International application number: PCT/CN2024/080757
(87) International publication number: WO 2025/091735

(57) **Abstract**

The present application provides a power supply module, a power supply system, and a nuclear fusion reaction system. The power supply module comprises a high-voltage direct-current power supply, a high-voltage capacitor unit, a thyristor, a first switch, and a freewheeling diode; the positive electrode of the high-voltage direct-current power supply is connected to the first end of the first switch, the second end of the first switch is connected to the first end of the high-voltage capacitor unit, and the negative electrode of the high-voltage direct-current power supply is connected to the second end of the high-voltage capacitor unit; the first end of the high-voltage capacitor unit is further connected to the anode of the thyristor, the cathode of the thyristor is connected to the output end of the freewheeling diode, and the second end of the high-voltage capacitor unit is further connected to the input end of the freewheeling diode; the second end of the high-voltage capacitor unit and the cathode of the thyristor are further used for being respectively connected to the two ends of a load unit.

## Description

The present application claims priority to Chinese Patent Application No. "202311440931.9", filed to China National Intellectual Property Administration on November 1, 2023 and entitled "POWER SUPPLY MODULE, POWER SUPPLY SYSTEM, AND NUCLEAR FUSION REACTION SYSTEM", the entire content of which is incorporated herein by reference.

### TECHNICAL FIELD

The present application relates to the technical field of power electronics, in particular to a power supply module, a power supply system, and a nuclear fusion reaction system.

### BACKGROUND

With the development of electronic technology, there are more and more electronic devices with various functions, and the electronic devices with different functions have different requirements for a current. For example, in a nuclear fusion reaction apparatus, a relatively large pulse current needs to be transmitted to a coil to cause a change in an electromagnetic field around the coil to generate plasma, and then the plasma is heated to a fusion reaction temperature to generate a fusion reaction.

However, a current power supply can only produce a relatively small current, which is relatively difficult to meet the requirements of the nuclear fusion reaction apparatus, so a power supply that can produce a relatively large pulse current is urgently needed.

### SUMMARY

In view of this, the present application provides a power supply module, a power supply system, and a nuclear fusion reaction system, which can generate a relatively large pulse current to meet the requirements of a nuclear fusion reaction.

According to one aspect of embodiments of the present application, a power supply module is provided, and the power supply module includes: a high-voltage direct-current power supply, a high-voltage capacitor unit, a thyristor, a first switch, and a freewheeling diode;
a positive electrode of the high-voltage direct-current power supply is connected to a first end of the first switch, a second end of the first switch is connected to a first end of the high-voltage capacitor unit, and a negative electrode of the high-voltage direct-current power supply is connected to a second end of the high-voltage capacitor unit;
the first end of the high-voltage capacitor unit is further connected to an anode of the thyristor, a cathode of the thyristor is connected to an output end of the freewheeling diode, and the second end of the high-voltage capacitor unit is further connected to an input end of the freewheeling diode; and
the second end of the high-voltage capacitor unit and the cathode of the thyristor are further configured to be respectively connected to two ends of a load unit.

According to another aspect of the embodiments of the present application, a power supply system is provided, and the power supply system includes: an upper computer, a serial server, and at least one of the above power supply modules; and
the upper computer is connected to the serial server, and the upper computer is configured to control the power supply module via the serial server.

According to yet another aspect of the embodiments of the present application, a nuclear fusion reaction system is provided, and the nuclear fusion reaction system includes: a Tokamak apparatus and the above power supply system;
the power supply system is connected to the Tokamak apparatus and is configured to emit a pulse current to a poloidal magnetic field coil in the Tokamak apparatus;
the poloidal magnetic field coil is configured to: generate a magnetic field based on the pulse current, wherein the magnetic field surrounds the poloidal magnetic field coil to ionize and break down a gas to form two initial plasma rings; and push the two initial plasma rings to be fused into one plasma ring and reconnect the magnetic field around the plasma ring so as to heat plasma in the plasma ring to a fusion reaction temperature for a fusion reaction.

In the power supply module provided by the embodiments of the present application, the high-voltage capacitor unit is charged via the high-voltage direct-current power supply, and then the first switch can be disconnected and the thyristor can be conducted, and the load unit is discharged via the high-voltage capacitor unit until an electric quantity of the high-pressure capacitor unit is exhausted, so that a primary pulse current can be input to the load unit. In addition, since a withstand voltage of the high-voltage capacitor unit and the thyristor is relatively large, a pulse current input to the load unit when the high-voltage capacitor unit discharges can be ensured to be relatively large, and a current requirement of the nuclear fusion apparatus can be met. In addition, the freewheeling diode has a freewheeling function on the load unit, so that a condition that the load unit is damaged due to a sudden change of voltage generated at two ends of the load unit can be avoided.

### BRIEF DESCRIPTION OF THE DRAWINGS

FIG. 1 is a schematic structural diagram of a circuit of a power supply module according to an embodiment of the present application;
FIG. 2 is a schematic structural diagram of a circuit of another power supply module according to an embodiment of the present application;
FIG. 3 is a schematic structural diagram of yet another power supply module according to an embodiment of the present application;
FIG. 4 is a physical schematic structural diagram of a power supply module according to an embodiment of the present application;
FIG. 5 is a schematic structural diagram of a power supply system according to an embodiment of the present application; and
FIG. 6 is a schematic structural diagram of another power supply system according to an embodiment of the present application.

### DETAILED DESCRIPTION

In the following description, numerous specific details are set forth in order to provide a thorough understanding of the present application. However, the present application is capable of being practiced in many other ways than those described herein, and those skilled in the art may make similar promotions without violating the meaning of the present application, and therefore the present application is not subject to the specific implementation disclosed below.

Terms used in one or more embodiments of the present application are intended only to describe specific embodiments and are not intended to limit one or more embodiments of the present application. The terms "a," "the," and "this" in the singular form as used in one or more embodiments of the present application and the accompanying claims are also intended to include the plural form unless the context clearly indicates otherwise. It should also be understood that the term "and/or" as used in one or more embodiments of the present application refers to and encompasses any or all possible combinations of one or more related listed items. The term "at least one" in one or more embodiments of the present application means "one or more", and "a plurality of" means "two or more". The term "include/comprise" is an open-ended description and should be understood to mean "including/comprising but not limited" and may include additional content in addition to what has been described.

It should be understood that although the terms "first," "second," and the like may be used to describe various information in one or more embodiments of the present application, such information should not be limited to these terms. These terms are used only to distinguish the same type of information from one another. For example, without leaving the scope of one or more embodiments of the present application, "first" may also be referred to as "second", and similarly, "second" may also be referred to as "first". Depending on the context, the word "if" as used here may be interpreted as "when..." or "while..." or "respond to determination".

In the field of electronic technology, all kinds of electronic devices require a power supply apparatus to supply power, and the power supplies required by different electronic devices may be different. The power supply required by a nuclear fusion reaction apparatus is different from that required by an ordinary electronic device. For example, the nuclear fusion reaction apparatus may include a spherical Tokamak (ST) apparatus and a compact torus (CT) apparatus. Due to a shape limitation of the nuclear fusion reaction apparatus, a central column is not generally provided or an arrangement space of the central column is too narrow, and a conventional central solenoid is provided in the nuclear fusion reaction apparatus to generate plasma by a solenoid induction method. In this case, it is usually difficult to obtain a plasma current at a level of mega amperes (MA); therefore, it is very important to study a starting method of discharging without a central solenoid to generate the plasma for improving plasma parameters (such as current) of the nuclear fusion reaction apparatus.

At present, a starting method of merging-compression (MC) the plasma has attracted more and more attention. In this method, a pair of poloidal magnetic field coils inside the nuclear fusion reaction apparatus are required to generate a current pulse to cause a rapid change of the surrounding electromagnetic field, so that the magnetic field surrounds the coils to ionize and break down a gas to form a pair of plasma rings. Then this plasma ring is pushed to fuse and the surrounding magnetic field is reconnected, and the plasma is heated and the plasma current is increased by utilizing a conversion characteristic of magnetic energy to plasma kinetic energy and heat energy in a magnetic reconnection process. Accordingly, a corresponding MC power supply needs to be designed to provide a pulse current required in the starting method of the MC plasma.

The embodiment of the present application provides a power supply module, which can output a relatively large pulse current, for example, this pulse current can be output to the poloidal magnetic field coil in the nuclear fusion reaction apparatus, so that this nuclear fusion reaction apparatus can realize a starting method of the MC plasma. The embodiment of the present application further relates to a power supply system and a nuclear fusion reaction system at the same time.

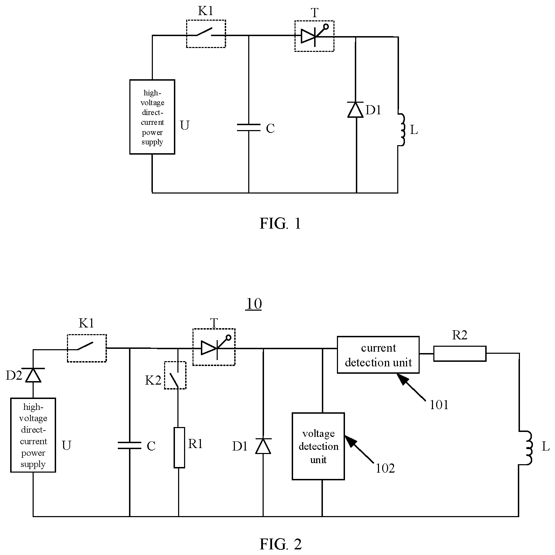

FIG. 1 is a schematic structural diagram of a circuit of a power supply module according to an embodiment of the present application. As shown in FIG. 1, this power supply module 10 includes a high-voltage direct-current power supply U, a high-voltage capacitor unit C, a thyristor T, a freewheeling diode D1, and a first switch K1. The switch in the embodiments of the present application may also be referred to as a contactor.

Where a positive electrode of the high-voltage direct-current power supply U is connected to a first end of the first switch K1, a second end of the first switch K1 is connected to a first end of the high-voltage capacitor unit C, and a negative electrode of the high-voltage direct-current power supply U is connected to a second end of the high-voltage capacitor unit C. The first end of the high-voltage capacitor unit C is further connected to an anode of the thyristor T, a cathode of the thyristor T is connected to an output end of the freewheeling diode D1, and the second end of the high-voltage capacitor unit C is further connected to an input end of a freewheeling diode D1. The second end of the high-voltage capacitor unit C and the cathode of the thyristor T are further configured to be respectively connected to two ends of a load unit

The high-voltage direct-current power supply U is configured to charge the high-voltage capacitor unit C, and the high-voltage capacitor unit C can be used as an energy storage component after being charged to generate a high-voltage heavy current, thereby outputting a current to the load unit. A control end of the thyristor T can be connected to the control unit, so that the control unit can control conduction and a disconnection of this thyristor T.

The freewheeling diode D1 may be connected to the load unit in parallel to perform a freewheeling function for the load unit. When the current in the circuit of the main circuit of the power supply (such as a circuit formed by the high-voltage capacitor unit C, the thyristor T, and the load unit) changes suddenly, the freewheeling diode D1 can enable the current on the load unit to change smoothly, so as to avoid a situation that the load unit is damaged due to a sudden change of voltage generated at two ends of the load unit.

For example, the first switch K1 may be turned on firstly, so that the high-voltage direct-current power supply U, the first switch K1, and the high-voltage capacitor unit C can form a first current loop, and the high-voltage direct-current power supply U charges the high-voltage capacitor unit C. If the high-voltage capacitor unit C is charged to a specified voltage, the high-voltage direct-current power supply U is controlled to stop outputting, and the first switch K1 is controlled to be disconnected, so as to stop charging the high-voltage capacitor unit C. Then, the thyristor T can be controlled to be turned on, so that the high-voltage capacitor unit C, the thyristor T and the load unit form a second current loop, and at this time, the high-voltage capacitor unit C can discharge to output a relatively high current to the load unit. In the process of outputting the current to the load unit, a voltage on the high-voltage capacitor unit C is gradually reduced. When the voltage of the high-voltage capacitor unit C reduced to 0, the current output to the load unit can be stopped. When the high-voltage capacitor unit C discharges to the load unit until the voltage is reduced to 0, the freewheeling diode D1 can freewheel the load unit, so that the current on the load unit is slowly reduced to avoid a sudden change of the current on the load. In this way, outputting a current pulse to the load unit is achieved, and the current output to the load unit can also be called a pulse current.

Since a withstand power of the high-voltage capacitor unit C and the thyristor T is relatively high, the high-voltage direct-current power supply U can output a relatively high voltage to the high-voltage capacitor unit C, and the high-pressure capacitor unit C can output a relatively high voltage and current to the load unit. In some embodiments, the high-voltage capacitor unit C supports outputting a voltage of 10 kilovolts, and the thyristor T supports transmitting a voltage of 10 kilovolts. In some embodiments, the high-voltage capacitor unit C supports outputting a current of 10 kiloamperes, and the thyristor T supports transmitting a current of 10 kiloamperes.

Illustratively, the thyristor T may be replaced by a thyristor valve block. The high-voltage capacitor unit C may be a high-voltage thin film capacitor unit. The high-voltage capacitor unit C may include only one high-voltage capacitor, or may include a plurality of high-voltage capacitors connected in parallel. This high-voltage capacitor may be a high-voltage film capacitor.

The high-voltage capacitor unit C can output a higher-level current by using a way that a plurality of high-voltage capacitors are connected in parallel, and different requirements of the nuclear fusion reaction apparatus can be met. According to the embodiment of the present application, the high-voltage film capacitor is used as an energy storage component, so that the power supply module has a higher current change rate (di/dt) capability, a stability and reliability of the power supply module can be ensured to be relatively high, and accidents such as explosion and so on are not easy to happen to the power source module.

The embodiment of the present application takes that this load unit is the coil L as an example, and an internal resistance of the coil L may be relatively small. For example, this coil L can be a poloidal magnetic field coil in the nuclear fusion reaction apparatus, and the power supply module 10 may supply power to the nuclear fusion reaction apparatus. In some embodiments, this load unit may also be other electrical devices, and the power supply module 10 may also provide a current to other apparatus requiring a high voltage and a large current.

To sum up, in the power supply module provided by the embodiment of the present application, the high-voltage capacitor unit is charged via the high-voltage direct-current power supply, and then the first switch can be disconnected and the thyristor can be conducted, and the load unit is discharged via the high-voltage capacitor unit until an electric quantity of the high-pressure capacitor unit is exhausted, so that a primary pulse current can be input to the load unit. In addition, since a withstand voltage of the high-voltage capacitor unit and the thyristor is relatively large, a pulse current input to the load unit when the high-voltage capacitor unit discharges can be ensured to be relatively large, and a current requirement of the nuclear fusion apparatus can be met. In addition, the freewheeling diode has a freewheeling function on the load unit, so that a condition that the load unit is damaged due to a sudden change of voltage generated at two ends of the load unit can be avoided.

FIG. 2 is a schematic structural diagram of a circuit of another power supply module according to an embodiment of the present application. As shown in FIG. 2, the power supply module 10 may further include other additional components based on the structure shown in FIG. 1.

In some embodiments, the power supply module 10 may further include an anti-reverse diode D2, and the anti-reverse diode D2 is located between the high-voltage direct-current power supply U and the high-voltage capacitor unit C. The anti-reverse diode D2 can prevent the high-voltage direct-current power supply U from reversely charging the high-voltage capacitor unit C, and if a circuit connection between the high-voltage direct-current power supply U and the high-voltage capacitor unit C is not correct, it cannot charge the high-voltage capacitance unit C.

For example, the anti-reverse diode D2 is located between the high-voltage direct-current power supply U and the first switch K1. As shown in FIG. 2, the positive electrode of the high-voltage direct-current power supply U is connected to the first end of the first switch K1 via the anti-reverse diode D2, the positive electrode of the high-voltage direct-current power supply U is connected to an input end of the anti-reverse diode D2, and the first end of first switch K1 is connected to the output end of anti-reverse diode D2.

In another implementation of the anti-reverse diode D2, the anti-reverse diode D2 may also be located between the first switch K1 and the high-voltage capacitor unit C, for example, the second end of the first switch K1 is connected to the input end of the anti-reverse diode D2, and the output end of the anti-reverse diode D2 is connected to the first end of the high-voltage capacitor unit C.

In another implementation of the anti-reverse diode D2, the negative electrode of the high-voltage direct-current power supply U is connected to the second end of the high-voltage capacitor unit C via the anti-reverse diode D2. For example, the output end of the anti-reverse diode D2 is connected to the negative electrode of the high-voltage direct-current power supply power supply U, and the input end of the anti-reverse diode D2 is connected to the second end of the high-voltage capacitor unit C.

In some embodiments, please continue to refer to FIG. 2, based on the structure shown in FIG. 1, the power supply module 10 may further include: a second switch K2 and a first resistor R1. The second switch K2 is connected to the first resistor R1 in series and is connected to the high-voltage capacitor unit C in parallel. For example, a first end of the second switch K2 is connected to a first end of the first resistor R1, and the two ends of the high-voltage capacitor unit C are further respectively connected to a second end of the second switch K2 and a second end of the first resistor R1. The positions of the second switch K2 and the first resistor R1 can also be interchanged, which is not limited in the embodiment of the present application. For example, the first resistor R1 may be a wire-wound resistor.

The first resistor R1 may be configured to discharge a voltage for the high-voltage capacitor unit C. When the high-voltage capacitor unit C discharges to the load unit, the second switch K2 may be disconnected. When the voltage on the high-voltage capacitor unit C is dropped to 0, there may still be some residual electric energy in the high-voltage capacitor unit, and at this time, the second switch K2 may be turned on, so that the first resistor R1 discharges the residual electric energy in the high-voltage capacitance unit C.

In some embodiments, please continue to refer to FIG. 2, based on the structure shown in FIG. 1, the power supply module 10 may further include: a second resistor R2. The second resistor R2 may be located in a second current loop formed by the high-voltage capacitor unit C, the thyristor T, and the load unit. The second resistor R2 can limit the current in the second current loop, so as to prevent the current in the second current loop from being too large and causing damage to the components in the second current loop.

Illustratively, as shown in FIG. 2, the second resistor R2 is located between the thyristor T and the load unit, the cathode of the thyristor T is connected to the first end of the second resistor R2, and the second end of the second resistance R2 is connected to the load unit. For example, the second resistor R2 may be a water-cooled resistor. In another example, the second resistor R2 may also be located between the high-voltage capacitor unit C and the thyristor T, or located between the high-voltage capacitor unit C and the load unit.

In some embodiments, please continue to refer to FIG. 2, based on the structure shown in FIG. 1, the power supply module 10 may further include: a current detection unit 101. The current detection unit 101 may be located in the second current loop formed by the high-voltage capacitor unit C, the thyristor T, and the load unit, so as to detect a current value in the second current loop. In the embodiment of the present application, the arrangement position of the current detection unit 101 in the second current loop is not limited.

For example, the first end of the high-voltage capacitor unit C is connected to the anode of the thyristor T via the current detection unit 101, that is, the current detection unit 101 is located between the high-voltage capacitor unit C and the thyristor T. For another example, as shown in FIG. 2, the cathode of the thyristor T may be connected to the load unit via the current detection unit 101, that is, the current detection unit 101 is located between the thyristor T and the load unit. FIG. 2 takes that the current detection unit 101 is located between the thyristor T and the second resistor R2 as an example, and the current detection unit 101 may also be located between the second resistor R2 and the load unit.

The current detection unit 101 may be a current sensor. The current detection unit 101 may periodically detect a current value in the second current loop and transmit the detected current value to the control unit. The control unit may control a display unit to display based on this current value, or adjust a working state of the components in the power supply module 10. If this current value does not reach a required current value, the control unit may control the high-voltage capacitor unit C to increase the output current.

In some embodiments, please continue to refer to FIG. 2, based on the structure shown in FIG. 1, the power supply module 10 may further include: a voltage detection unit 102. The voltage detection unit 102 is connected to the load unit in parallel, and is configured to detect a voltage value in the second current loop. In the embodiment of the present application, the arrangement position of the voltage detection unit 102 in the second current loop is not limited. For example, the second end of the high-voltage capacitor unit C and the cathode of the thyristor T are respectively connected to the two ends of the voltage detection unit 102. In another example, the two ends of the voltage detection unit 102 can be respectively connected to the second end of the high-voltage capacitor unit C and the anode of the thyristor T.

The voltage detection unit 102 can be a voltage sampling board. The voltage detection unit 102 can periodically detect a voltage value in the second current loop and transmit the detected voltage value to the control unit. An operation that can be performed by the control unit based on this voltage value can be referred to the related introduction about the current value, which will not be described here.

The embodiment of the present application only takes FIG. 2 as an example to illustrate the circuit structure when the power supply module 10 includes additional components based on FIG. 1, and takes that the power supply module 10 includes five additional components including the anti-reverse diode D2, the first resistor R1, the second resistor R2, the current detection unit 101 and the voltage detection unit 102 as an example. The power supply module 10 can also only include parts of the additional components of the five additional components, and accordingly, a circuit structure of the power supply module 10 in this case may be obtained by excluding other additional components not included based on FIG. 2. In the embodiment of the present application, other optional circuit structures of the power supply module 10 are not additionally illustrated.

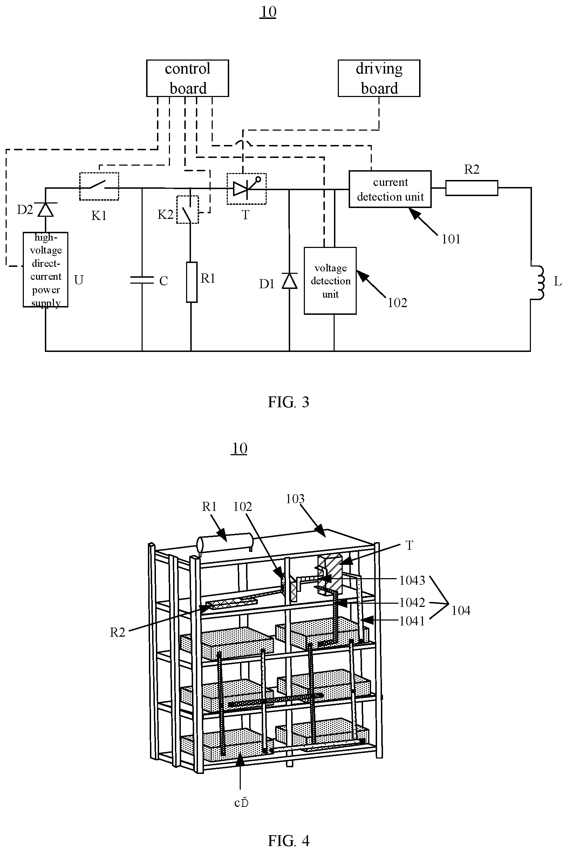

FIG. 3 is a schematic structural diagram of yet another power supply module provided by an embodiment of the present application. As shown in FIG. 3, based on the circuit structure of the above power supply module 10 (taking the structure shown in FIG. 2 as an example), the power supply module 10 may further include: a control board and a driving board. The above control unit may include this control board and the driving board.

The control board can be connected to the high-voltage direct-current power supply U and the first switch K1. The control board is configured to control the high-voltage direct-current supply U to supply power and control the first switch K1 to be turned on or turned off. The control board can further be connected to the second switch K2, the current detection unit 101 and the voltage detection unit 102, so as to control the second switch K2 to be turned on or turned off, and obtain the current value detected by the current detection unit 101 and the voltage value detected by the voltage detection unit 102. The driving board is connected to the thyristor T and is configured to control conduction of the thyristor T. In FIG. 3, dotted lines are used to indicate a connection relationship between the control board and the driving board and other components.

In the embodiment of the present application, a working process of the power supply module 10 may include: the control board controls the first switch K1 to be turned on firstly, and controls the second switch K2 to be disconnected, and controls the high-voltage direct-current power supply U to charge the high-voltage capacitor unit C to a specified voltage. After the high-voltage capacitor unit C is charged, the control board controls the high-voltage direct-current power supply U to close the output and disconnect K1. The driving board controls the thyristor T to be conducted, and at the same time, the high-voltage capacitor unit C discharges to the load unit until the voltage of the high-voltage capacitor unit C drops to 0. At this time, the control board controls the second switch K2 to be turned on, so as to discharge a residual voltage of the high-voltage capacitor unit C. After the voltage of the high-voltage capacitor unit C drops to 0, the freewheeling diode D1 freewheels the load unit until the current on the load unit drops to 0. This load unit can be a poloidal magnetic field coil in the nuclear fusion reaction apparatus, and this working flow can be one stroke in the starting method of the fusion compression plasma in the nuclear fusion reaction apparatus.

The above components in the power supply module 10 may belong to a main power portion of the power supply module 10. The power supply module 10 may further include a mechanical structure portion. FIG. 4 is a physical schematic structural diagram of a power supply module provided by an embodiment of the present application, and this FIG. 4 is used to illustrate the mechanical structure portion of the power supply module 10.

As shown in FIG. 4, each component in the power supply module 10 may be connected by a copper bar structure 104 to reduce noise in the power circuit formed by each component. For example, the high-voltage capacitor unit C includes a plurality of high-voltage capacitors connected in parallel, and FIG. 4 takes that the high-voltage capacitor unit C includes six high-voltage capacitors c' connected in parallel as an example, and these six high-voltage capacitors may be connected via the copper bar structure 104. Please continue to refer to FIG. 4, the high-voltage capacitor unit C and the thyristor T, the thyristor T and the current detection unit 101, as well as the second resistor R2 and the current detection unit 101 may also be connected via the copper bar structure 104.

For example, in FIG. 4, the copper bar structures connecting different components are distinguished and illustrated, for example, the positive electrode of each high-voltage capacitor c' may be connected to other components by using a copper bar structure 1041, and the negative electrode of each high-voltage capacitor c' may be connected to other components by using a copper bar structure 1042. The thyristor T is connected to the current detection unit 101, and the second resistor R2 is connected to the current detection unit 101 by a copper bar structure 1043.

Please continue to refer to FIG. 4, the power supply module 10 may further include: an insulation frame 103, the insulating insulation 103 includes a plurality of storage spaces, for example, the storage spaces may include storage cells, and the high-voltage capacitors c' in the high-voltage capacitor unit C may be located in different storage cells. By adopting this insulation frame 103, a combination of each high-voltage capacitor c' in the high-voltage capacitor unit C can be facilitated, and an insulating effect between each component can be ensured to be better.

Other components in the power supply module 10 may also be located on this insulation frame 103. As shown in FIG. 4, the thyristor T and the current detection unit 101 are located in a same storage cell, the second resistor R2 is located in one storage cell, and the first resistor R2 is located in one storage space. Other components in the power supply module 10 not shown in FIG. 4 may be located on the insulation frame 103, or may be located outside the insulation frame 103, such as being integrated into a chassis and then connected to the components on the insulation frame 103.

To sum up, in the power supply module provided by the embodiment of the present application, the high-voltage capacitor unit is charged via the high-voltage direct-current power supply, and then the first switch can be disconnected and the thyristor can be conducted, and the load unit is discharged via the high-voltage capacitor unit until an electric quantity of the high-pressure capacitor unit is exhausted, so that a primary pulse current can be input to the load unit. In addition, since a withstand voltage of the high-voltage capacitor unit and the thyristor is relatively large, a pulse current input to the load unit when the high-voltage capacitor unit discharges can be ensured to be relatively large, and a current requirement of the nuclear fusion apparatus can be met.

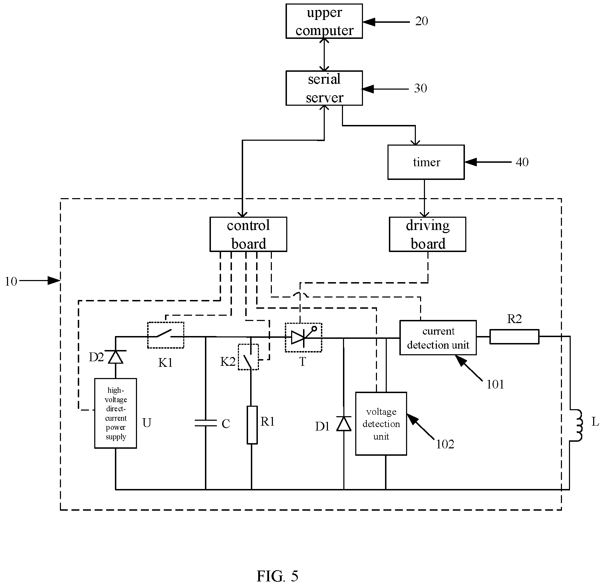

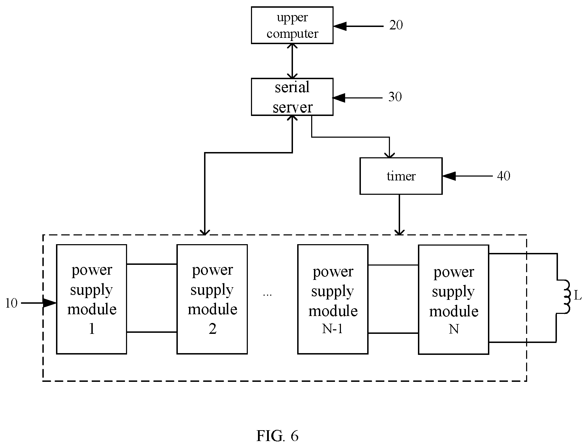

FIG. 5 is a schematic structural diagram of a power supply system provided by an embodiment of the present application; and FIG. 6 is a schematic structural diagram of another power supply system provided by an embodiment of the present application. As shown in FIG. 5 and FIG. 6, the power supply system may include: an upper computer 20, a serial server 30, and at least one power supply module 10, and the power supply module 10 may be the power supply module 10 shown in any one of FIG. 1 to FIG. 4.

FIG. 5 takes that this power supply system includes the power supply module 10 shown in FIG. 3 as an example. As shown in FIG. 6, the power supply system may include N power supply modules 10 connected in parallel, and these N power supply modules 10 may be connected in parallel with the load unit (such as the coil L), where N≥2. FIG. 6 does not illustrate a specific structure of the power supply module 10. The directions of the arrows connecting the components in FIG. 5 and FIG. 6 indicate an information interaction relationship between the components. In the embodiment of the present application, in the case that the power supply system includes a plurality of power supply modules 10, the high-voltage direct-current power supply U in each power supply module 10 may be shared, or may be charged by an independent high-voltage direct-current power supply U, which is not limited herein.

The upper computer 20 is connected to the serial server 30, and the upper computer 20 is configured to control the power supply module 10 via the serial server 30. The upper computer 20 is configured to control the charging and discharging of the power supply module 10, and the serial server 30 is configured to send control information to each power supply module 10 and obtain feedback information (such as fed back current value and voltage value) from each power supply module 10. For example, the controller can operate on this upper computer 20 to control the charging and discharging process of the power supply module 10. The aforementioned control unit may include the upper computer 20 and the serial server 30.

In some embodiments, please continue to refer to FIG. 5 and FIG. 6, the power supply system may further include: a timer 40 connected to the serial server 30. The upper computer 20 is configured to send the power supply time information of each power supply module 10 to the timer 40 via the serial server 30, and the timer 40 is configured to control each power supply module 10 to supply power to the load unit based on this power supply time information. In this way, the number of operations of the staff can be reduced, and an operation process can be simplified.

For example, this power supply time information may include triggering the power supply module 1 to discharge at a first moment, and triggering the power supply module 2 to discharge at an interval of 2 seconds after the discharge of the power source module 1 is completed. In this way, the timer 40 can send a driving signal to the driving board of the power supply module 1 at the first moment, so that this driving board drives the thyristor T in the power supply module 1 to be conducted, so that the power supply module 1 can discharge to the coil L. The timer 40 further starts timing after sending this driving signal, and after the timing lasts for up to 2 seconds, it sends a driving signal to the driving board of the power supply module 2 to drive the thyristor T in this power supply module 2 to conduct, causing the power supply module 2 to discharge to the coil L.

In some embodiments, each power supply module 10 can be provided with a corresponding serial port server 30. The upper computer 20 can send a control information for the corresponding power supply module 10 to each serial server 30, and then each serial server 30 controls the corresponding power supply module 10 to work respectively. Each power supply module 10 may also be provided with a corresponding timer 40, so that each timer 40 controls the corresponding power supply module 10 to do timing work.

In the embodiment of the present application, the power supply system may include a plurality of power supply modules 10 connected in parallel, and this power supply system may utilize the plurality of power supply modules 10 to generate a plurality of high-voltage large current pulses in a short time. In this way, this power supply system may be configured to provide current for the nuclear fusion reaction apparatus so as to ensure that this apparatus to realize multi-stroke nuclear fusion reaction, and the gas can be broken down for many times to generate the plasma. This power supply system can ensure that a mode of triggering the nuclear fusion reaction apparatus to carry out a nuclear fusion reaction is simple and the energy consumption is relatively low, which can ensure stability of the nuclear fusion reaction.

When the power supply system is configured to supply power to this nuclear fusion reaction apparatus, the upper computer 20 can sequentially control the charging of the high-voltage capacitor units in the power supply modules 1 to N via the serial server 30. When the voltage of each power supply module reaches a specified value, each power supply module can be controlled to discharge respectively (for example, the power supply modules 1 to N can be controlled to discharge sequentially, or a plurality of power supply modules can be simultaneously controlled to discharge), so as to meet the requirements of multi-stroke fusion. When any power supply module has been discharged, this power supply module can be charged again.

The embodiment of the present application further provides a nuclear fusion reaction system, which may include: a nuclear fusion reaction apparatus and the above power supply system (such as the power supply system shown in FIG. 5 and FIG. 6), and the power supply system is connected to the nuclear fusion reaction apparatus. For example, this nuclear fusion reaction apparatus is a Tokamak apparatus.

The Tokamak apparatus may include a pair of poloidal magnetic field coils, which may be connected in series. The power supply system is configured to send a pulse current to this poloidal field coil, and a manner of emitting the pulse current can refer to the aforementioned related description of the power supply module 10 and the power supply system. This poloidal magnetic field coil may generate a magnetic field based on the received pulsed current, which may ionize and break down the gas around the poloidal magnetic field coil to form two initial plasma rings. Then, the poloidal magnetic field coil may push these two initial plasma rings to merge into one plasma ring, and this magnetic field around the plasma ring may be reconnected. In the process of magnetic reconnection, the magnetic energy can be converted to the kinetic energy and thermal energy of the plasma, the plasma in the plasma loop can be heated, and a total plasma current will be significantly increased. When the plasma is heated to the fusion reaction temperature, the fusion reaction can occur.

The power supply system can utilize a plurality of power supply modules 10 connected in parallel inside to send a current pulse to a poloidal magnetic field coil in the Tokamak apparatus for a plurality of times, thereby realizing a multi-stroke nuclear fusion reaction of the Tokamak apparatus.

The above describes specific embodiments of the present application. Other embodiments are within the scope of the appended claims. In some cases, the acts or steps recorded in the claims may be performed in an order different from those in the embodiments and still achieve desirable results. In addition, the processes depicted in the drawings do not necessarily require the particular order shown or the sequential order to achieve desirable results. Multitasking and parallel processing are also possible or may be advantageous in some embodiments.

Those skilled in the art should also understand that the embodiments described in the specification are all preferred embodiments, and the acts and modules involved are not necessarily required by the present application. In the above embodiments, the description of each embodiment has its own emphasis, and for a part not described in detail in a certain embodiment, reference may be made to the relevant description of other embodiments.

The preferred embodiments disclosed above are only intended to assist in elucidating the present application. The optional embodiments do not provide a detailed description of all the details, nor does it limit the scope of the present application to the specific embodiments described. Obviously, many modifications and variations are possible in light of the teachings of the present application. These embodiments are chosen and described in detail in order to better explain the principles of the present application and the practical application, so that those skilled in the art may well understand and use the present application.

## Claims

1. A power supply module, comprising:
a high-voltage direct current power supply, a high-voltage capacitor unit, a thyristor, a first switch, and a freewheeling diode; wherein
a positive electrode of the high-voltage direct-current power supply is connected to a first end of the first switch, a second end of the first switch is connected to a first end of the high-voltage capacitor unit, and a negative electrode of the high-voltage direct-current power supply is connected to a second end of the high-voltage capacitor unit;
the first end of the high-voltage capacitor unit is further connected to an anode of the thyristor, a cathode of the thyristor is connected to an output end of the freewheeling diode, and the second end of the high-voltage capacitor unit is further connected to an input end of the freewheeling diode; and
the second end of the high-voltage capacitor unit and the cathode of the thyristor are further configured to be respectively connected to two ends of a load unit.

2. The power supply module according to claim 1, wherein the high-voltage capacitor unit comprises a plurality of high-voltage capacitors connected in parallel.

3. The power supply module according to claim 1 or 2, wherein the power supply module further comprises: an anti-reverse diode; and
the positive electrode of the high-voltage direct-current power supply is connected to the first end of the first switch via the anti-reverse diode, the positive electrode of the high-voltage direct current power supply is connected to an input end of the anti-reverse diode, and the first end of the first switch is connected to an output end of the anti-reverse diode.

4. The power supply module according to claim 1 or 2, wherein the power supply module further comprises: an anti-reverse diode located between the first switch and the high-voltage capacitor unit; wherein
the second end of the first switch is connected to an input end of the anti-reverse diode, and an output end of the anti-reverse diode is connected to the first end of the high-voltage capacitor unit.

5. The power supply module according to claim 1 or 2, wherein the power supply module further comprises: an anti-reverse diode located between the negative electrode of the high-voltage direct-current power supply and the high-voltage capacitor unit; wherein
an output end of the anti-reverse diode is connected to the negative electrode of the high-voltage direct-current power supply, and an input end of the anti-reverse diode is connected to the second end of the high-voltage capacitor unit.

6. The power supply module according to claim 1 or 2, wherein the power supply module further comprises: a second switch and a first resistor, and a first end of the second switch is connected to a first end of the first resistor; wherein
two ends of the high-voltage capacitor unit are further respectively connected to a second end of the second switch and a second end of the first resistor.

7. The power supply module according to claim 1 or 2, wherein the power supply module further comprises: a second resistor; wherein
the cathode of the thyristor is connected to a first end of the second resistor, and a second end of the second resistor is configured to be connected to the load unit.

8. The power supply module according to claim 1 or 2, wherein the power supply module further comprises: a current detection unit; and the first end of the high-voltage capacitor unit is connected to the anode of the thyristor via the current detection unit.

9. The power supply module according to claim 1 or 2, wherein the power supply module further comprises: a current detection unit; and the cathode of the thyristor is configured to be connected to the load unit via the current detection unit.

10. The power supply module according to claim 1 or 2, wherein the power supply module further comprises: a voltage detection unit; and the second end of the high-voltage capacitor unit and the cathode of the thyristor are respectively connected to two ends of the voltage detection unit.

11. The power supply module according to claim 1 or 2, wherein the power supply module further comprises: a voltage detection unit; and the second end of the high-voltage capacitor unit and the cathode of the thyristor are respectively connected to two ends of the voltage detection unit.

12. The power supply module according to claim 1 or 2, further comprising: a control board and a driving board; wherein
the control board is connected to the high-voltage direct-current power supply and the first switch; the control board is configured to control the high-voltage direct-current power supply to supply power and control the first switch to be turned on or turned off; and
the driving board is connected to the thyristor and is configured to control conduction and a disconnection of the thyristor.

13. The power supply module according to claim 1 or 2, wherein each component in the power supply module is connected via a copper bar structure.

14. The power supply module according to claim 2, further comprising: an insulation frame, wherein the insulation frame comprises a plurality of storage cells, and the high-voltage capacitors are located in different storage cells.

15. A power supply system, comprising: an upper computer, a serial server, and at least one power supply module, the power supply module being the power supply module according to any one of claims 1 to 14; wherein
the upper computer is connected to the serial server, and the upper computer is configured to control the power supply module via the serial server.

16. The power supply system according to claim 15, further comprising: a timer connected to the serial server; wherein
the upper computer is configured to send power supply time information of each power supply module to the timer via the serial server, and the timer is configured to control the at least one power supply module to supply power to the load unit based on the power supply time information.

17. The power supply system according to claim 15, wherein the at least one power supply module comprises a plurality of power supply modules connected in parallel.

18. A nuclear fusion reaction system, comprising: a Tokamak apparatus and the power supply system according to any one of claims 15 to 17; wherein
the power supply system is connected to the Tokamak apparatus and is configured to emit a pulse current to a poloidal magnetic field coil in the Tokamak apparatus;
the poloidal magnetic field coil is configured to: generate a magnetic field based on the pulse current; wherein the magnetic field surrounds the poloidal magnetic field coil to ionize and break down a gas to form two initial plasma rings; and push the two initial plasma rings to be fused into one plasma ring and reconnect the magnetic field around the plasma ring so as to heat plasma in the plasma ring to a fusion reaction temperature for a fusion reaction.
